# EUROPEAN PATENT APPLICATION

(11) **EP 0 528 470 A2**
(43) Date of publication of application: **24.02.1993**
(21) Application number: 92202319.7
(22) Date of filing: 28.07.1992
(51) Int. Cl.: C08L 67/06, B29D 11/00, G02B 1/04, C08F 291/00, C08L 53/00

(54) **Endless objects**

(30) Priority: 01.08.1991 EP 91201989
(71) Applicant: DSM N.V., NL-6411 TE Heerlen (NL)
(72) Inventor: Bastiaansen, Cornelis Wilhelmus Maria, NL-6224 LH Maastricht (NL)

(57) **Abstract**

Thermosettable composition suitable for the production of endless objects without the use of continuous carrier material, whereby the composition comprises an unsaturated polyester and a high molecular weight thermoplastic polymeric monomer.

Products made from a composition according to the invention are, depending on the starting materials, suitable for applications in those areas where a good temperature resistance, a good fire resistance and/or a good corrosion and solvent resistance are required besides good mechanical properties. Examples are cable sheathing, fireproof clothing, asbestos replacement, high temperature filters, aircraft interiors, precursors for carbon fibre, food packagings (for instance for use in a microwave oven), condenser films, optical fibre and filament winding products.

## Description

The invention relates to a thermosettable composition suitable for the production of endless objects without the use of a continuous carrier material.

The term 'endless objects' as used in the present specification refers to objects that have a virtually infinite length in at least one direction, such as fibres, filaments, films, sheets and tubes. The term 'carrier material' as used herein refers to material which potentially is infinitely long, such as filaments or films, and onto which the thermosettable composition is applied and then cured. This includes a foil or fiber.

A thermosetting composition from which endless objects can be made without using a continuous carrier material is described in JP-A-61262707.

This publication describes a composition on the basis of acrylates which by a special treatment can be processed to endless objects, in particular to optical fibres. To accomplish this, a set-up is built in which an acrylate mixture is pumped through a tube, the acrylates being partially cured in the tube, after which the partially cured acrylates are spun and cured further.

The drawback of a composition as described in JP-A-61262707 is that a complicated treatment is required in order to be able to process the monomers continuously, because the monomers have to be cured partially but must not reach their gel point. The range within which the monomers can be processed continuously consequently is rather narrow. This requires accurate adjustment of the process conditions and continuous controlling of the degree of curing during the transport through the tube. Consequently it is a very slow, laborious and thereby costly process, and in any case very sensitive to irregularities.

The aim of the invention is to provide a composition which does not have said drawbacks and from which therefore easily endless objects can be produced.

According to the invention this is achieved in that the composition comprises an unsaturated polyester resin and also contains a thermoplastic polymer in an amount to make the composition spinnable at least part of the polymer being dissolved in the resin. Preferably all of the polymer is dissolved.

By 'high molecular weight' (HMW) is meant here higher than 50,000 g/mol. Preferably the molecular weight of the thermoplastic polymer is even much higher than 50,000, e.g. 250,000 and higher. If the thermoplastic polymer has a molecular weight of more than 250,000 g/mol, it is considered to have an 'ultrahigh molecular weight' (UHMW). The molecular weight is the weight-averaged molecular weight.

Because of the HMW thermoplastic polymer, the composition can for instance be processed and formed in an extruder. Moreover, the composition can be stretched, either in one or in two directions. In this way fibres or sheets for instance can be produced.

Another difference between a composition described in JP-A-61262707 and the invention is that the composition according to the invention need not be cured until after the spinning or the processing in the extruder, while the composition according to JP-A-61262707 is already partially cured before the spinning.

The spinnability will be used as criterion of the continuous processability in the manner as set out here. If a composition is spinnable, it can normally also be processed to other forms of endless objects besides fibers. The concept of spinnability is difficult to quantify, but in the present specification the definition as given by Ziabicki in Chapter 2 of 'Fundamentals of Fibre Formation', J. Wiley & Sons Ltd., London, 1976, will be used:
'A liquid is spinnable under the given conditions if a steady-state, continuous elongation of the fluid jet proceeds without a break of any kind'.

By 'the given conditions' are meant here the conditions optimized by a man skilled in the art.

In the experiments the spinnability is tested by determining whether a thread picked up with a glass rod from a quantity of test material can be elongated and wound around a small glass rod. This test is described by Ziabicki in the same reference.

The spinnability depends, among other factors, on the molecular weight of the thermoplastic polymer. The higher the molecular weight, the less material has to be added to cause the viscosity to be enhanced by a certain degree in order to make the composition spinnable.

The spinnability tests as performed in the experiments which follow are intended to show that by routine experimentation it is possible to adapt the circumstances (e.g. the temperature) of most experiments in such a way that a composition is spinnable.

In general, it will be advantageous to add the thermoplastic in the form of little particles with a diameter of less then 0.5 mm, because this improves the speed of dissolution of the thermoplastic polymer in the unsaturated polyester. It is also possible to heat the thermoplastic polymer before it is added to the composition.

A fast dissolution speed is not necessary for a succesful application of a composition according to the invention.

Preferably the thermoplastic polymer has a molecular weight of at least 50,000 and the composition contains, relative to the composition as a whole, an amount of the polymer ranging from at least 0.1 % in case the polymer has a molecular weight of 5.000.000 g/mol or more to at most 50 % in case the polymer has a molecular weight of 50.000 g/mol, the amount being lower accordingly as the molecular weight is higher. More preferably the molecular weight of of the polymer is at least 1,000,000 and the amount ranges from at least 0.1 % in case the polymer has a molecular weight of 5,000,000 g/mol or more to less than 2% in case the polymer has a molecular weight of 1,000,000 g/mol.

The minimum quantity of thermoplastic polymer to be added in order to obtain a continuously processable composition also depends on the type of thermoplastic polymer: in general, of thermoplastic polymers that are high viscous above their melting point, a lower quantity will be needed then of thermoplastic polymers that are low viscous above their melting point. For instance, in general a higher quantity of a branched thermoplastic polymer than of a linear thermoplastic polymer will be required. In general the desired properties of the composition will be determined by the average chain length of the thermoplastic polymeric polymer dissolved in it. This means for instance that of polyethylene oxide (PEO) a lower weight percentage with a certain molecular weight will suffice than of polyvinyl acetate (PVA), because PEO is less heavy than PVA per unit of chain length.

It is possible to add higher percentages of thermoplastic polymer. However, the properties of the product may be adversely affected by the thermoplastic polymer. Therefore it is usually desirable to keep the quantity of thermoplastic polymer as small as possible.

Mixing in of a thermoplastic polymer in a liquid before polymerization in order to increase the viscosity is described in GB-A-1,057,434, which does not refer to unsaturated polyesters however. The aim of that patent specification is to provide a solution to the problem of a polymer not dissolving in its own monomers. There is no suggestion in the patent specification that it would be advantageous to add thermoplastic polymers to a thermosetting system on the basis of unsaturated polyesters.

GB-A-1.057.434 does describe the possibility of adding to the Newtonian liquid of mainly acrylonitrile a minor quantity of monomer which can bring about a certain degree of crosslinking, but only a low crosslink density is achieved with this. A product with such a low crosslink density is generally not regarded as a thermoset product. A product obtained by the process according to GB-A-1.057.434 consequently will not possess the excellent properties of a product according to the invention.

A manner of making endless objects from unsaturated polyesters is to coat a carrier material such as continuous or semi-continuous fibres with unsaturated polyester. Stretching of objects made of carrier fibre is practically impossible. The material is then processed by coextrusion or pultrusion.

The thermoplastic polymers can be chosen from all thermoplastic polymers that can be produced with a high molecular weight and which are compatible with (i.e. at least partially soluble in) the unsaturated polyester to be used. Preferred are polyethylene oxide, polypropylene oxide, styrene maleic anhydride acrylonitrile copolymer, polyacrylate, poly(m)ethyl(meth)acrylate, polyarylamide, polyacrylamide or polyvinyl acetate. Most preference is given to polymers that can be obtained with extremely high molecular weights, especially polyethylene oxide or polyvinyl acetate.

The unsaturated polyester can be any unsaturated polyester and is preferably chosen from the alkenically unsaturated cross-linkable polyesters or polymers with terminal acrylate derivate groups, the so-called vinylester polymers. Of course, mixtures of these polymers can be used also. These polymers are preferably used in combination with an alkylenically unsaturated monomer and/or prepolymer. More preferably the unsaturated polyesters are polyesters with alkenically unsaturations in the polymer chain.

These polymers preferably have medium or high reactivity so that a high rate of reaction can be realized. The molecular weight per double bond is preferably lower than 800, particularly lower than 400.

Such a polymer preferably has a weight-average molecular weight of 400-8000, more specifically of 500-6000, most specifically 700-4000.

Such a polymer usually has an acid number of 0-100, preferably of 0-50, specifically of 1-25.

Such a polymer usually has a hydroxyl number of between 0 and 200, preferably between 1 and 100, specifically between 1 and 50. The hydroxyl and acid numbers are defined as mg KOH per gramme polymer according to respectively ASTM E 222-73 and ASTM D 1639-70.

The unsaturated polymers are mainly synthesized from organic compounds containing carboxyl groups and alcohol groups. Usually diacids and dialcohols are used, however up to 40% (wt) of the two types of difunctional monomers can be replaced by higher-functional monomers and monofunctional monomers and mixtures thereof. Preferably less than 20% (wt) of the two types of difunctional monomers is replaced by a higher-functional monomer.

Preferably at least one ethylenically unsaturated diacid is used. It may be an advantage to terminate the polyester with an unsaturated monocarboxylic acid.

A special class of polyesters is formed by the vinylester polymers. Vinylester polymers are built up from polyols and possibly polyacids, with terminal acrylate groups, methacrylate groups or other acrylates substituted at the β-site with a C₂-C₄ alkyl group. Vinylesters usually are the reaction products of polyepoxides and (meth)acrylic acids. The vinylester thus has terminal (meth)acrylate groups. (The polyols may be OH-terminated polyesters, novolak, phenol, ethers or polyesters or, for instance, half esters or polyols modified with epoxy, isocyanate, polyamide, etc.)

The acids that can be applied normally contain fewer than 30 carbon atoms, specifically fewer than 20, more specifically fewer than 10 carbon atoms.

The ethylenically unsaturated diacid is preferably an α,β-ethylenically unsaturated diacid, for instance a diacid chosen from the group of fumaric acid, maleic acid, chloromaleic acid, itaconic acid, mesaconic acid, citraconic acid or the corresponding esters or anhydrides.

As ethylenically unsaturated mono or triacid can be chosen, for instance, from the group: linoleic acid, or the other unsaturated fatty acids, cinnamic acid, atropic acid, acrylic acid, methacrylic acid, ethacrylic acid, propacrylic acid, crotonic acid, isocrotonic acid or corresponding ester or anhydride derivatives.

Other diacids are preferably saturated-(cyclo)aliphatic or saturated-aromatic. Aliphatic and aromatic diacids are chosen, for instance, from the group: succinic acid, glutaric acid, methylglutaric acid, adipic acid, sebacic acid, pimelic acid, phthalic acid, isophthalic acid, terephthalic acid, dihydrophthalic acid, tetrahydrophthalic acid, hexahydrophthalic acid, tetrachlorophthalic acid, 3,6-endomethylene-1,2,3,6-tetrahydrophthalic acid, 1,4-cyclohexane dicarboxylic acid and hexachloro-endomethylenetetrahydrophthalic acid or the corresponding ester or anhydride derivatives.

Aromatic carboxylic acids are used preferably for 5-50% to obtain optimum mechanical properties.

Mono and/or higher-functional aromatic or aliphatic carboxylic acids are chosen, for instance, from the group: benzoic acid, ethylhexanoic acid, mono or trimeric fatty acids, such as stearic acid, acetic acid, propionic acid, pivalic acid, valeric acid, trimellitic acid, 1,2,3,4-butanetetracarboxylic acid, 1,2,4,5-benzenetetracarboxylic acid, 1,4,5,6-naphthalenetetracarboxylic acid, 1,2,3-propanetricarboxylic acid, 1,2,3-tricarboxylic acid butane, camphoric acid, naphthoic acid, toluic acid or the corresponding ester or anhydride derivatives.

The alcohols that can be used normally contain fewer than 30 carbon atoms, particularly fewer than 20 carbon atoms. Preference is given to the use of saturated aliphatic alcohols or alcohols containing an aromatic group, ethylenically unsaturated alcohols can be used also. Dialcohols are chosen, for instance, from the group: ethylene glycol, di(ethylene glycol), tri(ethylene glycol), 1,2-propanediol, 1,3-propanediol, 1,2-butanediol, 1,3-butanediol, 1,4-butanediol, 2-methyl-1,3-propanediol, 1,4-pentanediol, 1,4-hexanediol, 1,6-hexanediol, 2,2-dimethyl-propanediol, cyclohexanediol, 2,2-bis-(hydroxycyclohexyl)-propane, 1,2-trimethylol-propanemonoallylether, pinacol, 2,2,4-trimethylpentanediol-1,3,3-methylpentanediol-1,5, with 1-3 equivalents of ethoxylated or propoxylated bisphenol-A and novolak prepolymers possibly partly etherified and ethoxylated. Instead of 1,2-diol, the corresponding oxirane compound can be used.

Mono and higher-functional alcohols are chosen, for instance, from the group of methanol, ethanol, 1- or 2-propanol, 1- or 2-butanol, one of the isomers of pentanol, hexanol, octanol, 2-ethylhexanol, fatty alcohols, benzyl alcohol, 1,2-di(allyloxy)-3-propanol, glycerol, 1,2,3-propanetriol; pentaerythritol, tris(hydroxyethyl)isocyanurate and novolak prepolymers, possibly partly etherified and ethoxylated. Instead of 1,2-diol, the corresponding oxirane compound can be used.

It is possible also to choose di and/or higher-functional alcohols having more than 30 carbon atoms. These preferably have a molecular weight lower than 5000, more specifically lower than 2000, but higher than 400. Di and/or higher-functional alcohols having a molecular weight higher than 400 are chosen, for instance, from the group of polyethylene glycols, polypropylene glycols, addition products of ethylene oxide and/or propylene oxide with bisphenol-A, or phenol-formaldehyde (pre)polymers, preferably epoxidated.

Preference is given to the use of an unsaturated polyester modified with dicyclopentadienyl (DCPD) units. The fact is that this will result in an increase of the glass-transition temperature (Tg) of the resulting article. Preference is given to the use of an unsaturated polyester with 2-45% (wt), more specifically with 20-35% (wt) DCPD. For a further increase of the Tg, the polymer can be modified also with imide groups and/or amide groups. To this end diamines and alcohol amines can be used.

The monomer reactive with the unsaturated polyester preferably is an alkenically unsaturated monomer. The monomer is used in an amount of 10 to 50% (wt) as related to the unsaturated polyester.

Normally the alkylenically unsaturated monomer contains fewer than 50 carbon atoms, preferably fewer than 30, and more specifically fewer than 15, but more than 3 carbon atoms. The monomer is preferably of the vinylaromatic, vinylether, vinylester, acrylate and/or allyl type. More specifically an acrylate compound or vinylaromatic compound is used, because these react quickly during the polymerization reaction.

Vinylaromatic compounds are chosen, for instance, from the group of styrene, α-methylstyrene, p-methylstyrene, o-, m-, p-chlorostyrene, t-butylstyrene, divinylbenzene, bromostyrene, vinylnaphthalene, α-chlorostyrene, vinyltoluene and divinylnaphthalene.

Acrylate compounds are chosen, for instance, from the group of methyl, ethyl, propyl, isopropyl, butyl, isobutyl, phenyl or benzyl acrylate and methacrylate, 2-ethylhexyl (meth)acrylate, dihydrodicyclopentadiene acrylate, cyclohexyl (meth)acrylate, butanediol (meth)acrylate, (meth)acrylic acid amide, butanediol di-(meth)acrylate, the reaction products of (meth)acrylic acid and phenyl- or cresylglycidyl ethers, propyleneglycol di(meth)acrylate, di- and triethyleneglycol di(meth)acrylate, di-and tripropyleneglycol di(meth)acrylate, hexanediol di(meth)acrylate, trimethylolpropane tri(meth)acrylate, hexanediol di(meth)acrylate, trimethylolpropane tri(meth)acrylate. Derivatives of acrylates substitued at the β-site with C₂-C₄ can be used also.

Vinylether compounds, vinylester compounds and allyl compounds are chosen, for instance, from the group of allylphthalate, triallylcyanurate, diallylisophthalate, diallylterephthalate, diallylphthalate, ethylhexanoic acid vinylester, vinylacetate, vinylpropionate, vinylpivalate, vinylether, vinylpropylolether, vinylbutylolether and vinylbenzylalcoholethers.

The thermoplastic polymer should at least partially dissolve in the unsaturated polyester. Depending on the choice of thermoplastic polymer and unsaturated polyester and the rate of curing, a molecular blend is obtained or a crystallisation or a phase separation takes place upon curing. The latter may give rise to favourable properties, such as improved toughness of the final product.

Low molecular thermoplastic polymers may further be added to the composition to improve certain properties, such as the impact resistance.

Additives may further be taken up in the composition, such as inhibitors, promoters, accelerators, flexibilizers, lubricants, release agents, antioxidants, pigments, surfactants, crosslinkers, fillers or fibre reinforcement agents.

Initiation of the curing may be effected in all ways by which unsaturated polyesters can be cured, such as thermally, with UV light, with other electromagnetic radiation or with electron or gamma radiation.

Preferably, the curing takes place under the influence of UV light. The point in time at which curing commences can be chosen freely then: during or after the shaping process or during the cooling stage. An additional advantage is that when UV curing is applied higher temperatures can be used during the suspending, dissolving and extruding or spinning, without causing the curing to start already.

A possible mode of operation for a process for the manufacture of products is the following:
The thermoplastic polymer is suspended and dissolved in the unsaturated polyester. This may require heating of the composition to a suitable temperature, for instance between 50 and 200°C. Preferably the composition is not heated to a temperature at which one or more of the components start to boil. The mixture is then extruded or spun and then partially or fully cured.

A possible way of combining thermoplastic polymer and unsaturated polyester is mixing an amount of thermoplastic polymer particles into the low viscous unsaturated polyester at a low temperature, thereby forming a low viscous suspension. The low viscous suspension can easily be pumped into e.g. an extruder. In the extruder the suspension is heated up and the thermoplastic polymer dissolves, thereby increasing the viscosity. From this extruder filaments are extruded and cured afterwards.

Additional steps in this mode of operation can be mixing in of reinforcements such as reinforcing fibres in the composition and stretching of the extruded or spun intermediate.

With reinforcing fibers is meant, according to the invention, fibers that have properties that are such that they improve the mechanical properties of the product in which those fibers are incorporated. Reinforcing fibers will normally not melt or otherwise loose their mechanical strength under the processing conditions. Examples are glass fibers and carbonfibers, but any other fiber can be used principally.

The viscoelasticity of the composition can be adjusted to the chosen method of processing.
If spinning in a downward direction is opted for, a lower weight percentage or a lower molecular weight thermoplastic polymer will suffice than in the case of for instance film blowing in an upward direction.

If it is intended to produce thin objects, it is recommendable to stretch the composition, before the curing. If fibrous fillers have been added, which are required to be in oriented condition in the product, it is also recommendable to stretch the composition prior to curing. If anisotropy is wanted in the final product, it is recommendable to stretch after or during the curing. After curing the product consists of a densly crosslinked threedimensional network, but can be stretched a little bit.

Preferably, the composition is stretched unaxially to a fiber with a thickness of less then 1 mm or biaxially to a sheet with a thickness of less then 1 mm.

If the curing of the unsaturated polyester is effected with supply of heat, it can be advantageous to perform the curing in a bath filled with a liquid that is inert during the curing reaction and has a specific gravity which is virtually equal to that of the composition.

It is possible to have the reaction take place under the influence of a catalyst, which is in the inert liquid and from there diffuses into the composition.

It is possible to postcure the products. This could render products with even better properties and especially with better high temperature properties.

Products made from a composition according to the invention are, depending on the starting materials, suitable for applications in those areas where a good temperature resistance, a good flame resistance and/or a good corrosion and solvent resistance are required besides good mechanical properties. Examples are cable sheathing, fireproof clothing, asbestos replacement, high temperature filters, high temperature films for flexible printed circuits, aircraft interiors, precursors for carbon fibre, food packagings (for instance for use in a microwave oven), condensor films, optical fibre and filament winding products. Here it is a significant advantage that the unsaturated polyester resin compositions according to the invention need not be processed at a high temperature, in contrast to thermoplastic polymers with a high intrinsic temperature resistance. The invention is notably advantageous where sheets, films, fibres, tubes or other endless objects are required with one or more of the above-mentioned properties. The products, further, can be produced as bundles of thin filaments or as single, thicker monofilaments. The products according to the invention can be reduced to products of smaller length by cutting, sawing, breaking or similar methods.

The invention will be illustrated by means of the following examples and comparative experiments, without being restricted thereto.

Tensile tests on fibres were performed at room temperature on a Zwick tensile tester with fibre clamps. The initial length of the fibre was 50 cm; the crosshead speed was 5 cm/min. From the measured stress/strain curve the (Young's) E-modulus, the tensile strength and the elongation at break were determined.
As molecular weight the value according to the manufacturer was used.
LOI measurements were performed according to ASTM D2863. DMA measurements were performed according to M.E. Brown, Introduction to Thermal Analysis, chapter 8, pp. 72 ff. TGA and DSC measurements were performed according to F.W. Billmeyer, Textbook of Polymer Science, John Wiley and Sons, ISBN 0 441 072966.

### Examples I-II

### Determination of the percentages of thermoplastic polymer required for spinnability

Polyethylene oxide (PEO) was obtained from Aldrich Chemie, W. Germany, with molecular weights of 100,000, 300,000, 600,000 and 5,000,000 according to the manufacturer.

The unsaturated polyester was a Stypol 40 8210 (registered trademark) of DSM Resins, Zwolle, NL.

Four PEO's of different molecular weight were suspended at room temperature in the unsaturated polyester with varying concentrations. The different molecular weights and concentrations are listed in table 1. The PEO was dissolved in the resin in a Brabender kneader at a temperature of 120°C.

The solution was transferred to dishes, which were subsequently heated to two different temperatures: 40°C in example I and 80°C in example II.

With a glass rod it was attempted to pick up a thread of material from each dish and then to wind the thread around a small glass rod positioned horizontally over the dish. The spindle was in a slow rotating motion. By 'moderately spinnable' in the following tables is meant that only after several attempts and with very careful action was it possible to pick up such a thread from the solution, wind it around the spindle and continuously withdraw a thread.

**Table 1**

| Spinnability at 40°C and 80°C | | | | |
|---|---|---|---|---|
| Mol. weight [g/mole] | | Concentration of thermoplastic polymer | Spinnability | |
| (II)80°C | | | [% w/w] | (I)40°C |
| a | 100,000 | 1 | - | - |
| b | | 5 | - | - |
| c | | 10 | - | - |
| d | 300,000 | 1 | - | - |
| e | | 5 | ± | ± |
| f | | 10 | + | ± |
| g | 600,000 | 1 | ± | - |
| h | | 5 | + | ± |
| i | | 10 | ++ | + |
| j | 5,000,000 | 0.5 | + | ± |
| k | | 1.0 | + | + |
| l | | 5.0 | ++ | ++ |

The concentration of the thermoplastic polymer is given as weight percentage relative to the total composition. The spinnability was measured according to the test method as described above; -- means very poorly spinnable, - means poorly spinnable, ± means moderately spinnable, + means well spinnable and ++ means very well spinnable.

The table shows that of thermoplastic polymer with a higher molecular weight a lower percentage is required to make the solution spinnable than of thermoplastic polymer with a lower molecular weight.

Comparing the two temperatures shows that at higher processing temperatures relatively more has to be added to make the solution spinnable.

The invention relates by preference to a composition with such a high percentage of thermoplastic polymer of a certain molecular weight that at the composition's processing temperature the composition is spinnable. So, with a desired processing temperature of 40°C the composition contains at least 1% w/w of a thermoplastic polymer with a molecular weight of 600,000.

With a desired processing temperature of 80°C the composition preferably contains 5% w/w of the thermoplastic polymer with a molecular weight of 600,000.

However, the quantities stated above apply here to PEO with the given unsaturated polyester. If other unsaturated polyester containing compositions and/or other HMW polymers are used, the figures will probably be different. The above guidelines provide a clear indication how the invention can be applied in analogous cases.

### Comparative experiment A

The procedure of examples I to II was repeated, but without mixing in PEO in the unsaturated polyester. Again it was examined whether the solution could be spun to a fibre at a temperature of 40 or 80°C. This was not the case.

### Experiment III

An amount of the resin of Example I was mixed with an amount of PEO with a molecular weight of 600.000 in particle form (weight ratio resin to thermoplastic polymer 95 : 1) at room temperature to obtain a low viscous suspension. To the suspension an amount of 3% Irgacure 651 was added as an UV-initiator. The suspension was pumped into a Brabander extruder. In the extruder, the suspension was heated to 80°C, whereby a solution is formed.

The solution was extruded and fed, through a metering pump, to a die, containing 10 holes. The 10 resulting filaments were wound around a spindle, which turned around with such a speed that the fibers were stretched between the die and the spindle. The stretching and winding took place under a N₂-blanket. The fibers were cured by emitting UV-light on them between the die and the spindle.

The multi filament yarn had a Young's modulus of 2 GPa and a Tensile Strength of 35 MPa.

## Claims

1. Thermosettable composition suitable for the production of endless objects without the use of continuous carrier material, characterized in that the composition comprises an unsaturated polyester resin and also contains a thermoplastic polymer in an amount to make the composition spinnable at least part of the polymer being dissolved in the resin.

2. Thermosettable composition according to claim 1, wherein the thermoplastic polymer has a molecular weight of at least 50,000 and the amount ranges from at least 0.1 % in case the polymer has a molecular weight of 5,000,000 g/mol or more to at most 50 % in case the polymer has a molecular weight of 50,000 g/mol, the amount being lower accordingly as the molecular weight is higher.

3. Thermosettable composition according to claim 2, wherein the molecular weight of of the polymer is at least 1,000,000 and the amount ranges from at least 0.1 % in case the polymer has a molecular weight of 5,000,000 g/mol or more to less than 2% in case the polymer has a molecular weight of 1,000,000 g/mol.

4. Composition according to any one of the claims 1-3, characterized in that the unsaturated polyesters are chosen from the group consisting of alkenically unsaturated cross-linkable polyesters and polymers with terminal acrylate derivate groups, the vinylester polymers and mixtures of them.

5. Composition according to any one of the claims 1-4, characterized in that the thermoplastic polymer is chosen from the group comprising polyethylene oxide, polyamide, styrene maleic anhydride acrylonitrile copolymers, polypropeneoxide, polyvinyl alcohol polymethylmethacrylate and polyvinyl acetate.

6. Composition according to any one of the claims 1-5, characterized in that the composition contains fibrous reinforcing material.

7. Process for making of an endless object without the use of continuous carrier material, characterized in that a composition according to any one of the claims 1-6 is heated to a suitable temperature, the thermoplastic polymer is at least partially dissolved, the composition is extruded or spun and subsequently at least partially cured.

8. Process according to claim 7, characterized in that the complete or partial curing of the unsaturated polyester takes place in a bath filled with a liquid which is inert during the curing reaction and has a specific gravity which is virtually equal to that of the composition.

9. Process according to claim 8, characterized in that the inert liquid contains a catalyst which is suitable for the curing of unsaturated polyesters and can diffuse from the liquid into the composition.

10. Process according to claim 7, characterized in that the composition contains a UV initiator and is cured by exposing the composition to UV radiation.

11. Process according to any one of the claims 7-10, characterized in that the composition is stretched uniaxially or biaxially before, during or after the at least partial curing of the composition.

12. Process according to claim 11, characterized in that the composition is uniaxially stretched to a fibre with a thickness of less than 1 mm.

13. Process according to claim 11, characterized in that the composition is stretched biaxially to a sheet with a thickness of less than 1 mm.

14. Process according to any one of the claims 7-13, characterized in that the composition is postcured.

15. Endless object obtained by at least partial curing of a composition according to any one of the claims 1-6 or by application of the process according to any one of the claims 7-14.

16. Composition as substantially described in the introduction of the specification and the examples.
